# EUROPEAN PATENT APPLICATION

(11) **EP 4 513 717 A1**
(43) Date of publication of application: **26.02.2025**
(21) Application number: 24719038.2
(22) Date of filing: 27.03.2024
(51) Int. Cl.: H02J 50/10, G06F 1/26, H02J 50/80, H04M 19/04, H02J 7/00, H02J 50/90

(54) **ELECTRONIC DEVICE FOR WIRELESSLY CHARGING BATTERY**

(30) Priority: 05.07.2023 KR 20230086855; 20.09.2023 KR 20230125648
(71) Applicant: Samsung Electronics Co., Ltd., Suwon-si, Gyeonggi-do 16677 (KR)
(72) Inventor: KANG, Sangwoo, Suwon-si Gyeonggi-do 16677 (KR)
(74) Representative: HGF
(86) International application number: PCT/KR2024/003819
(87) International publication number: WO 2025/009693

(57) **Abstract**

The electronic device includes a coil; a battery; a power receiving circuit configured to receive a power signal from a power supply device through the coil and output to the battery; a power conversion circuit configured to convert a voltage value of the power signal output from the power receiving circuit to the battery; a communication circuit configured to communicate with the power supply device through the coil; a control circuit configured to control the power receiving circuit, the power conversion circuit, and the communication circuit; and a drive circuit configured to provide a power signal to the control circuit for driving the control circuit. The drive circuit is configured to identify a voltage value of a power signal output from the power receiving circuit, provide a power signal output from the power receiving circuit to the control circuit and the communication circuit based on the identified voltage value being greater than a first threshold voltage value, and provide a power signal output from the battery to the control circuit and the communication circuit based on the identified voltage value being greater than a second threshold voltage value configured to be less than the first threshold voltage value, and less than the first threshold voltage value.

## Description

### [Technical Field]

Embodiments of the present disclosure relate to an electronic device for wirelessly charging a battery.

### [Background Art]

In a wireless charging system, a battery may be wirelessly charged using a coil. For example, when a receiving coil of a portable power receiving device (e.g., a smartphone, a smart watch, a wireless earphone charging case (or cradle)) is proximate to a transmitting coil of a power supply device, the power receiving device may charge the battery using a power signal received from the power supply device through the receiving coil.

The above information is provided as related art for the purpose of providing a better understanding of the present disclosure. No claim or determination is made as to the applicability of any of the foregoing as prior art related to the present disclosure.

### [Disclosure of Invention]

### [Technical Problem]

In the power receiving device, the control circuit may be awakened by the power signal received from the power supply device and may initiate wireless charging of the battery through data communication with the power supply device. However, even though the two devices are in close proximity, if the transmitting and receiving coils are not correctly aligned, the voltage of the power signal may be lower than a minimum value required to wake up the control circuit, and therefore wireless charging of the battery may not be initiated.

Embodiments of the present disclosure may provide an electronic device configured to wake up a control circuit so that wireless charging can start even when the transmitting and receiving coils are not aligned and then guide the user to align them to increase charging efficiency. The technical problem to be achieved in this disclosure is not limited to the technical problems mentioned above, and other technical problems that are not mentioned will be clearly understood by those skilled in the art from the description below.

### [Solution to Problem]

According to one embodiment, an electronic device may include a coil; a battery; a power receiving circuit configured to receive a power signal from a power supply device through the coil; a power conversion circuit configured to convert a voltage value of the power signal received from the power receiving circuit and output the power signal received from the power receiving circuit to the battery; a communication circuit configured to communicate with the power supply device through the coil; a control circuit configured to control the power receiving circuit, the power conversion circuit, and the communication circuit; and a drive circuit configured to provide a power signal to the control circuit for driving the control circuit. The drive circuit may be configured to identify a voltage value of the power signal output from the power receiving circuit. The drive circuit may be configured to provide a power signal output from the power receiving circuit to the control circuit and the communication circuit based on the identified voltage value being greater than a first threshold voltage value. The drive circuit may be configured to provide a power signal output from the battery to the control circuit and the communication circuit based on the identified voltage value being less than the first threshold voltage value and greater than a second threshold voltage value.

According to one embodiment, a method of operating an electronic device is provided. The electronic device may include a coil; a battery; a power receiving circuit configured to receive a power signal from a power supply device through the coil and output to the battery; a power conversion circuit configured to convert a voltage value of the power signal output from the power receiving circuit to the battery; a communication circuit configured to communicate with the power supply device through the coil; and a control circuit configured to control the power receiving circuit, the power conversion circuit, and the communication circuit. The method may include identifying a voltage value of a power signal output from the power receiving circuit. The method may include providing the power signal output from the power receiving circuit to the control circuit and the communication circuit based on the identified voltage value being greater than a first threshold voltage value. The method may include providing a power signal output from the battery to the control circuit and the communication circuit based on the identified voltage value being less than the first threshold voltage value and greater than a second threshold voltage value.

### [Advantageous Effects of Invention]

According to embodiments of the present disclosure, the electronic device may also wake up the wireless charging control circuit even when the transmitting and receiving coils are not correctly aligned. This means that wireless charging can start so the electronic device can still be charged even when the coils are not correctly aligned. A user can also be guided to improve the alignment of the transmitting and receiving coils in order to increase or improve the charging efficiency and thereby speed up the charging of the electronic device. In addition, various other effects identified herein, either directly or indirectly, may be provided.

### [Brief Description of Drawings]

Figure 1 is a block diagram illustrating an electronic device in an network environment according to an embodiment.
Figure 2 is a block diagram of a power management module and a battery according to an embodiment.
FIG. 3 illustrates a wireless charging system according to one embodiment.
FIGS. 4a, 4b, 4c, and 4d are diagrams to illustrate operations performed by a power receiving device based on charging being initiated by input power according to one embodiment.
FIG. 5 is a diagram to illustrate the process of the drive circuit waking up the second control circuit so that PD communication can begin according to one embodiment.
FIG. 6 is a flow chart to illustrate operations of a drive circuit to initiate charging of a battery according to one embodiment.
FIG. 7 is a flow chart to illustrate operations of a processor to increase charging efficiency according to one embodiment.

In the following, embodiments of the present disclosure are described in detail with reference to the drawings to facilitate practice by one of ordinary skill in the art to which the disclosure pertains. However, the disclosure may be implemented in many different forms and is not limited to the embodiments described herein. With respect to the description in the drawings, the same or similar reference numerals may be used for the same or similar components. Also, in the drawings and associated descriptions, descriptions of well-known features and configurations may be omitted for clarity and brevity.

### [Mode for the Invention]

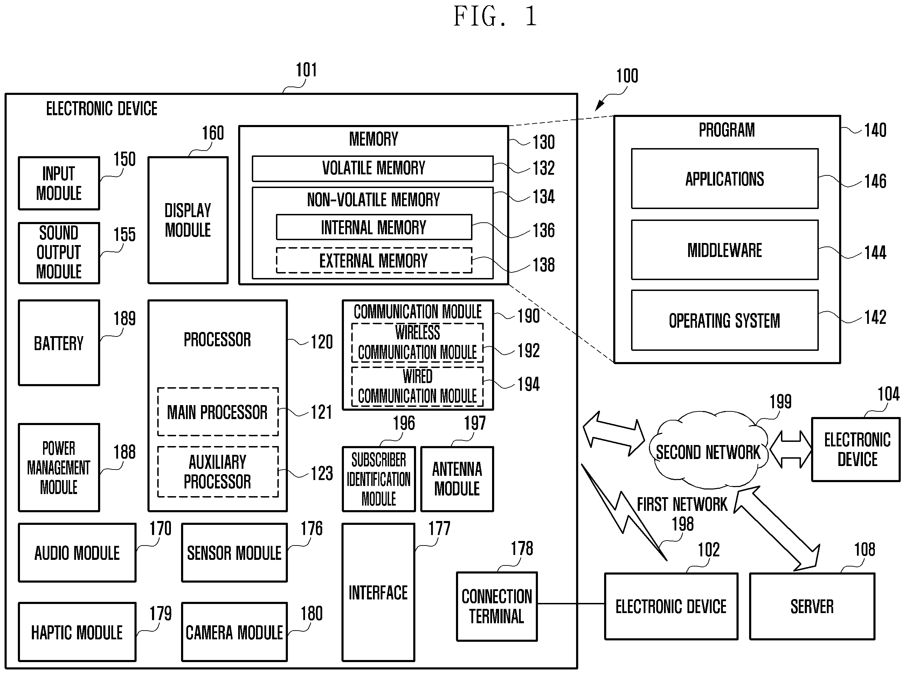

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

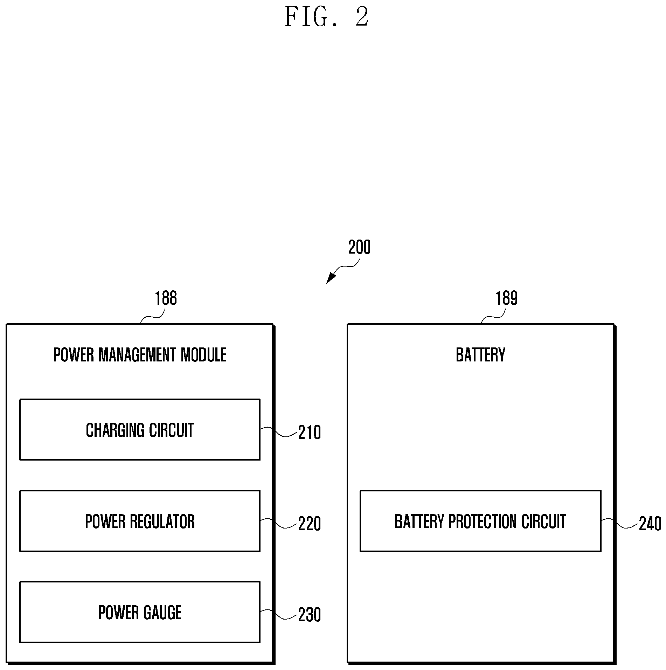

Fig. 2 is a block diagram 200 illustrating the power management module 188 and the battery 189 according to various embodiments. Referring to Fig. 2, the power management module 188 may include charging circuitry 210, a power adjuster 220, or a power gauge 230. The charging circuitry 210 may charge the battery 189 by using power supplied from an external power source outside the electronic device 101. According to an embodiment, the charging circuitry 210 may select a charging scheme (e.g., normal charging or quick charging) based at least in part on a type of the external power source (e.g., a power outlet, a USB, or wireless charging), magnitude of power suppliable from the external power source (e.g., about 20 Watt or more), or an attribute of the battery 189, and may charge the battery 189 using the selected charging scheme. The external power source may be connected with the electronic device 101, for example, directly via the connecting terminal 178 or wirelessly via the antenna module 197.

The power adjuster 220 may generate a plurality of powers having different voltage levels or different current levels by adjusting a voltage level or a current level of the power supplied from the external power source or the battery 189. The power adjuster 220 may adjust the voltage level or the current level of the power supplied from the external power source or the battery 189 into a different voltage level or current level appropriate for each of some of the components included in the electronic device 101. According to an embodiment, the power adjuster 220 may be implemented in the form of a low drop out (LDO) regulator or a switching regulator. The power gauge 230 may measure use state information about the battery 189 (e.g., a capacity, a number of times of charging or discharging, a voltage, or a temperature of the battery 189).

The power management module 188 may determine, using, for example, the charging circuitry 210, the power adjuster 220, or the power gauge 230, charging state information (e.g., lifetime, over voltage, low voltage, over current, over charge, over discharge, overheat, short, or swelling) related to the charging of the battery 189 based at least in part on the measured use state information about the battery 189. The power management module 188 may determine whether the state of the battery 189 is normal or abnormal based at least in part on the determined charging state information. If the state of the battery 189 is determined to abnormal, the power management module 188 may adjust the charging of the battery 189 (e.g., reduce the charging current or voltage, or stop the charging). According to an embodiment, at least some of the functions of the power management module 188 may be performed by an external control device (e.g., the processor 120).

The battery 189, according to an embodiment, may include a protection circuit module (PCM) 240. The PCM 240 may perform one or more of various functions (e.g., a pre-cutoff function) to prevent a performance deterioration of, or a damage to, the battery 189. The PCM 240, additionally or alternatively, may be configured as at least part of a battery management system (BMS) capable of performing various functions including cell balancing, measurement of battery capacity, count of a number of charging or discharging, measurement of temperature, or measurement of voltage.

According to an embodiment, at least part of the charging state information or use state information regarding the battery 189 may be measured using a corresponding sensor (e.g., a temperature sensor) of the sensor module 176, the power gauge 230, or the power management module 188.. According to an embodiment, the corresponding sensor (e.g., a temperature sensor) of the sensor module 176 may be included as part of the PCM 240, or may be disposed near the battery 189 as a separate device.

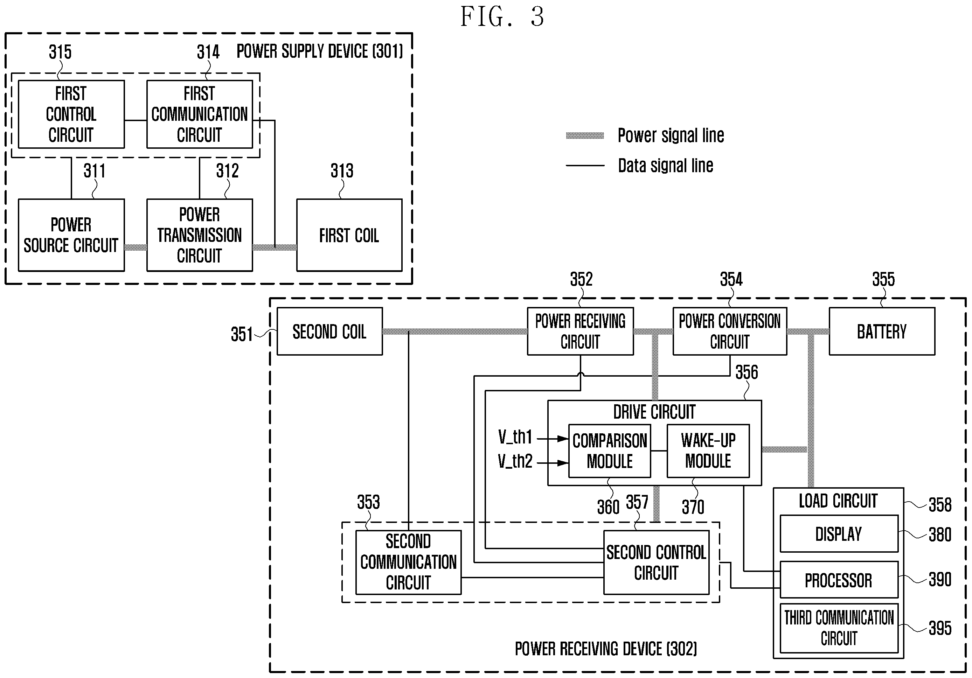

FIG. 3 illustrates a wireless charging system according to one embodiment. A power supply device 301 (e.g., the electronic device 102 of FIG. 1) may wirelessly transmit a power signal. A power receiving device 302 (e.g., the electronic device 101 of FIG. 1) may wirelessly receive a power signal. The power receiving device 302 may receive the power signal transmitted by the power supply device 301.

The wireless charging system may perform wireless charging (e.g., a general wireless charging) based on a specified protocol. For example, according to the WPC standard, wireless charging operations may include ping operations, identification & configuration operations, and power transfer operations. The ping operation may include identifying whether the power receiving device 202 is mounted on the charging pad of the power supply device 201. The identification & configuration operation may include setting a power value of a power signal to be transmitted to the power receiving device 202 through data communication between the power supply device 201 and the power receiving device 202. The power transfer operation may include transmitting a power signal having the power value configured in the identification & configuration operation from the power supply device 201 to the power receiving device 202.

The power supply device 301 may include a power source circuit 311, a power transmission circuit 312, a first coil 313, a first communication circuit 314, and a first control circuit 315.

The power source circuit 311 may provide power signals to the power transmission circuit 312 for the transmission to power receiving device 302. For example, the power source circuit 311 may include an adapter that converts the current of an externally sourced power signal from alternating current (AC) to direct current (DC) and outputs a voltage of power, adjusted to a specified voltage value based on control of the first control circuit 315. According to one embodiment, the power source circuit 311 may adjust the voltage of the direct current (DC) power supplied by the external power device (e.g., an adapter) to a different voltage (lower or higher) based on the control of the first control circuit 315 and supply the adjusted voltage to the power transmission circuit 312.

The power transmission circuit 312 may be configured to convert the current of the power signal received from the power source circuit 311 from DC to AC for wirelessly transmitting the power signal through the first coil 313. For example, the power transmission circuit 312 may include an inverter (e.g., a full bridge circuit) configured to periodically convert the direction of the current. The first coil 313 may be resonant to a specific frequency. For example, the power supply device 301 may further include a resonant circuit to cause the first coil 313 to resonate at a specific frequency (e.g., a frequency prescribed by a wireless power consortium (WPC) standard). The inverter may generate a second power signal having the resonant frequency by converting the current of the first power signal received from the power source circuit 311 from DC to AC to match a specific frequency (e.g., the resonant frequency of the first coil 313) and output the second power signal to the first coil 313. Accordingly, the second power signal may be wirelessly transmitted to the power receiving device 302 through the first coil 313. The power supply device 301 may include a regulating circuit (e.g., a low drop out (LDO) regulator) that regulates the voltage of the first power signal input to the inverter from the power source circuit 311 based on control of the first control circuit 315.

The first coil 313 may be, for example, a spiral-type coil wound multiple times in a clockwise or counterclockwise direction around an axis perpendicular to a plane on which the power receiving device 302 is mounted on a charging pad of the power supply device 301. By electrical coupling of the coils 313 and 351, a power signal may be supplied from the power supply device 301 to the power receiving device 302. In addition to transmitting power, the first coil 313 may be utilized as an antenna for data communication (e.g., an in-band communication).

The first communication circuit 314 may perform data communication with the power receiving device 302 through the first coil 313. For example, the first communication circuit 314 may receive a data signal from the first control circuit 315, load the received data signal onto a power signal supplied to the power receiving device 302, and transmit the data signal to the second communication circuit 353 of the power receiving device 302. The method of loading the data signal onto the power signal may utilize, for example, a technique of modulating an amplitude and/or a frequency of the power signal. The first communication circuit 314 may obtain the data signal received from the second coil 351 of the power receiving device 302 at the first coil 313 of the power supply device 301 by demodulating the power signal transmitted from the first coil 313 to the second coil 351. The first communication circuit 314 may transmit the acquired data signal to the first control circuit 315.

The first control circuit (e.g., microcontroller unit (MCU)) 315 may be implemented as a single chipset with memory configured in the power supply device 301. The first control circuit 315 may control a power delivery to the power receiving device based on information received from the power receiving device 302 through the first communication circuit 314. For example, the first control circuit 315 may control the power transmission circuit 312 to periodically transmit a power signal (e.g., a ping signal or a wake-up signal) for the purpose of detecting an external object (e.g., the power receiving device 302). The power supply device 301 may monitor changes in features (e.g., frequency, amplitude) of the power signal through the first communication circuit 314 and recognize that an object is present in the vicinity of, or within a predetermined distance of, or within a power supply range of, the power supply device 301 based on the changes in features. For example, a change in features may occur in the power signal transmitted for the purpose of detecting an external object because of the object being mounted on the charging pad. The first control circuit 315 may recognize that the object is proximate if the amount of change meets a specified condition (e.g., if the amount of change is greater than or equal to a threshold). For example, the first control circuit 315 may generate a first ping signal (e.g., an analog ping) through the power transmission circuit 312 at a specified first period. If the proximity of the object is identified by the first ping signal, the first control circuit 315 may generate a second ping signal (e.g., a digital ping) through the power transmission circuit 312 at a specified second period (e.g., a shorter period than the first period). The first control circuit 315 may recognize that the proximate object mounted on the charging pad is the power receiving device 302 if a response (e.g., a signal strength packet (SSP)) to the transmission of the second ping signal is received through the first communication circuit 314.

Based on, or in response to, recognizing the presence of the power receiving device 302, the first control circuit 315 may transmit a data signal to the power receiving device 302 through the first communication circuit 314. The data signal may include information indicating information that the power supply device 301 requests from the power receiving device 302 and/or information that the power receiving device 302 has requested from the power supply device 301 (e.g., identification information of the power supply device 201). The information that the power supply device 301 requests from the power receiving device 302, by transmitting a data signal to the power receiving device 302, may include identification information of the power receiving device 302 and/or configuration information related to wireless charging. The identification information may include a version information, a manufacturing code, or a device identifier. The configuration information may include information regarding a wireless charging frequency, a maximum power that can be supplied, or a power that can be supplied by the power supply device 301 to the power receiving device 302 for charging the battery. The first control circuit 315 may receive the above requested information from the power receiving device 302 through the first communication circuit 314 as a response message. The first control circuit 315 may control the power transmission circuit 312 to transmit a power signal for the purpose of charging the battery based at least in part on the identification information and/or the configuration information provided in the received response message.

The first control circuit 315 may receive a feedback signal for controlling the power supply from the power receiving device 202 through the first coil 313. The feedback signal may include a control error packet (CEP) as defined in the WPC standard. The control error packet may include a control error value (CEV). For example, the control error value may be an integer (e.g., -1, 0, +1) that falls between -128 and +127. While the power transmission circuit 312 is transmitting the power signal through the first coil 313 to the power receiving device 302, the first control circuit 315 may adjust a feature of the power signal (e.g., voltage, current) or terminate the transmission of the power signal based on a feedback signal received from the power receiving device 302. For example, the first control circuit 315 may control the power transmission circuit 312 to increase or decrease the voltage and/or frequency of the power signal based on an error value (e.g., a CEV included in the CEP) received from the power receiving device 302 through the first communication circuit 314. For example, the error value (e.g., a CEV) may include a value determined by a difference between a rectified voltage (e.g., a voltage output from the power receiving circuit 352) rectified at the power receiving device 302 and a target voltage specified by power receiving device 302. For example, if the difference between the rectified voltage and the target voltage is within a specified error range, the error value may be configured to be "0" by the power receiving device 302, and the first control circuit 315 may accordingly maintain the voltage of the power signal so that the voltage is unchanged. The power receiving device 302 may transmit a control error packet with a negative control error value to the power supply device 301 to request a reduction in the magnitude of the charging power. The power receiving device 302 may transmit a control error packet with a positive control error value to the power supply device 301 to request an increase in the magnitude of the charging power. For example, if the rectified voltage is less than the target voltage (e.g., if less than the target voltage minus a value representing an error range), the error value may be configured as a positive number (e.g., "+1") by the power receiving device 302, and the first control circuit 315 may accordingly increase the power (e.g., voltage) of the power signal output from the power transmission circuit 312 to the first coil 313. For example, the first control circuit 315 may control the power source circuit 311 to increase the voltage level of the power signal output from the power source circuit to the power transmission circuit 312. As another example, the first control circuit 315 may control the power transmission circuit 312 to decrease a frequency of the power signal output from the power transmission circuit 312 to the first coil 313. As another example, the first control circuit 315 may control the power transmission circuit 312 to increase a duty ratio (a percentage of time that a pulse (power signal) is on during one cycle) of a power signal output from the power transmission circuit 312 to a designated transmission coil. If the rectified voltage is greater than the target voltage (e.g., greater than the sum of the target voltage and the above error value), the error value may be configured as a negative number (e.g., "-1") by the power receiving device 302, and the first control circuit 315 may lower the power of the power signal accordingly. For example, the first control circuit 315 may control the power source circuit 311 to lower the voltage level of the power signal output from the power source circuit 311 to the power transmission circuit 312. As another example, the first control circuit 315 may control the power transmission circuit 312 to increase a frequency of the power signal output from the power transmission circuit 312 to a designated transmission coil. As another example, the first control circuit 315 may control the power transmission circuit 312 to decrease a duty ratio of a power signal output from the power transmission circuit 312 to a designated transmission coil. The first control circuit 315 may control the power transmission circuit 312 to terminate outputting the power signal to the first coil 313 when a termination signal (e.g., a packet (e.g., a CS 100 Packet) sent by the power receiving device 302 indicating that charging the battery 355 is finished or that the battery 355 has reached a designated level of charge) is received from the power receiving device 202 through the designated transmitting coil.

The first control circuit 315, together with the first communication circuit 314, may be configured as a single integrated circuit (IC). For example, the one integrated circuit may be configured to perform the controlling of the power delivery and the wireless communication with the power receiving device 302 through the first coil 313.

The first control circuit 315 may be configured separately from the first communication circuit 314. For example, the first control circuit 315 may include a microcontroller unit (MCU) and the first communication circuit 314 may include an integrated circuit configured to perform wireless communication functions.

The power receiving device 302 may include a second coil 351, a power receiving circuit 352, a second communication circuit 353, a power conversion circuit 354, a battery 355, a drive circuit 356, a second control circuit 357 (also known as a control circuit for wireless charging), and a load circuit 358. The drive circuit 356 may be configured to output either a power signal received from the power receiving circuit 352 (input power) or a power signal received from the battery 355 (battery power) as driving power to drive the second control circuit 357 and the second communication circuit 353. According to one embodiment, the drive circuit 356 may be powered by battery power and may be configured to comprise a comparison module 360 and a wake-up module 370. Load circuit (or, alternatively, system) 358, which refers to electronic components that are driven using power signals from power supply device 301 and/or power signals received from battery 355 through power conversion circuit 354, may include display 380 (e.g., the display module 160 in FIG. 1), processor 390 (e.g., the processor 120 in FIG. 1), and third communication circuit 395 (e.g., the communication module 190 in FIG. 1). According to one embodiment, the third communication circuit 395 may perform communication (e.g., the out-band communication) with the power supply device 301 in connection with power control. A communication circuit corresponding to the third communication circuit 395 may be included in the power supply device 301.

The second coil 351 may be a spiral-type coil that is wound multiple times in a clockwise or counterclockwise direction. When the power receiving device 202 is mounted on the charging pad, the second coil 351 may be substantially aligned with any one of the multiple transmitting coils 213. The second coil 351 may receive a power signal from at least one of the multiple transmitting coils 213. The second coil 351 may resonate at the same frequency as the frequency at which the at least one of the transmitting coils 313 resonates. The power receiving device 302 may further include resonant circuit to cause the second coil 351 to resonate at a specific frequency, such as a frequency prescribed by a wireless power consortium (WPC) standard. In addition to receiving power, the second coil 351 may be utilized as an antenna for data communication (e.g., an in-band communication).

The power receiving circuit 352 may be configured to pass the power signal received from the power supply device 301 through the second coil 351 to the power conversion circuit 354. For example, the power receiving circuit 352 may include a rectification circuit that converts the current of the power signal from AC to DC. The power receiving circuit 352 may output a voltage (V_REC, rectified voltage) rectified by the rectification circuit to the power conversion circuit 354 (e.g., a DC-DC converter circuit).

The second communication circuit 353 may perform data communication (e.g., an in-band communication) with the power supply device 301 through the second coil 351. For example, the second communication circuit 353 may receive a data signal from the second control circuit 357 and transmit the signal (e.g., a response signal to the received signal) to the power supply device 301 using a power signal received from the power supply device 301. The method of embedding the data signal in the power signal may utilize any of the previously exemplified techniques for modulating the amplitude and/or frequency of the power signal. For example, the second communication circuit 353 may change the amplitude of the power signal by controlling switching to open and close a switch located in an electrical path connecting the second coil 351 to the ground of the power receiving device 302. The second communication circuit 353 may demodulate the power signal transmitted from the power supply device 301 to the power receiving coil 551 to obtain the data signal transmitted by the power supply device 301 to the power receiving device 302. The second communication circuit 353 may transmit the acquired data signal to the second control circuit 357.

The power conversion circuit (or, alternatively, charging circuit) 354 may convert the voltage value and/or current value of the power signal received from the second coil 351 through the power receiving circuit 352 and output to the battery 355. For example, the power conversion circuit 354 may support constant current (CC) and constant voltage (CV) charging based on control of the second control circuit 357. For example, while the charging mode is in CC mode, the power conversion circuit 354 may keep the current of the power signal output from the power conversion circuit 354 to the battery 355 constant at a charging current value configured by the second control circuit 357 such that the voltage of the battery 355 rises to a specified target voltage value. When the charging mode is converted from CC mode to CV mode by the voltage of the battery 355 reaching the target voltage value, the power conversion circuit 354 may charge the battery 355 while keeping the voltage of the battery 355 at the target voltage value under the control of the second control circuit 357. During charging of the battery 355 in CV mode, when the current of the power signal input to the battery 355 decreases to a specified charge completion current value (e.g., a top off current value), the power conversion circuit 354 may complete charging of the battery 355 by stopping the output of the power signal to the battery 355 based on the control of the second control circuit 357.

The second control circuit 357 may be in data communication with the power supply device 301 through the second communication circuit 353. Based on the data communication, the second control circuit 357 may control the power receiving circuit 352 to receive a power signal through the second coil 351 and control the power conversion circuit 354 to charge the battery 355 using the received power signal.

The second control circuit 357, along with the second communication circuit 353, may be configured on one integrated circuit (e.g., PMIC). For example, the one integrated circuit may be configured to control the receiving of the power and the wireless communication with the power supply device 301 through the second coil 351.

The second control circuit 357 may be configured separately from the second communication circuit 353. For example, the second control circuit 357 may include a microcontroller unit (MCU) and the second communication circuit 353 may include an integrated circuit configured to perform wireless communication functions.

According to one embodiment, in the drive circuit 356, the comparison module 360 may identify a voltage value of the input power (hereinafter, the input voltage value). The comparison module 360 may compare the identified voltage value with a first threshold voltage value (V-th1) and a second threshold voltage value (V_th2) configured to be less than the first threshold voltage value (V_th1). The comparison module 360 may output the results of the comparison to the output module 356. For example, if the input voltage value is greater than the first threshold voltage value (V_th1), the comparison module 360 may output a first signal indicating this fact (hereinafter, the first wake-up signal) to the output module 370. If the input voltage value is less than the first threshold voltage value (V_th1) but greater than the second threshold voltage value (V_th2), the comparison module 360 may output a second signal indicating this fact (hereinafter, the second wake-up signal) to the output module 370.

According to one embodiment, the comparison module 360 may include a debounce unit. The debounce unit may limit the output of the wake-up signal for a specified time. For example, the debounce unit may output a first wake-up signal to the wake-up module 370 when a state in which the input voltage value is greater than the first threshold voltage value (V_th1) persists for more than a specified threshold time, and may not output the first wake-up signal if the input voltage value becomes less than the first threshold voltage value (V_th1) within the threshold time. The debounce unit may output a second wake-up signal to the wake-up module 370 when the state in which the input voltage value is less than the first threshold voltage value (V_th1) but greater than the second threshold voltage value (V_th2) persists for more than the threshold time, and may not output the second wake-up signal if the input voltage value becomes less than the second threshold voltage value (V_th2) within the threshold time.

According to one embodiment, in drive circuit 356, the wake-up module 370 may output the input power to the second communication circuit 353 and the second control circuit 357 based on or in response to a first wake-up signal being received from comparison module 360. The wake-up module 370 may output the battery power to the second communication circuit 353 and the second control circuit 357 based on or in response to the second wake-up signal being received from the comparison module 360. The second communication circuit 353 and the second control circuit 357 may wake up based on or in response to either the first wake-up signal or the second wake-up signal being generated by the drive circuit 356. The second control circuit 357 may transmit a response signal (e.g., SSP) to the power supply 310 through the second communication circuit 353. Thereafter, the second control circuit 357 may begin charging the battery 355 by performing the operations (e.g., identification & configuration operations, and power transfer operations) as described above.

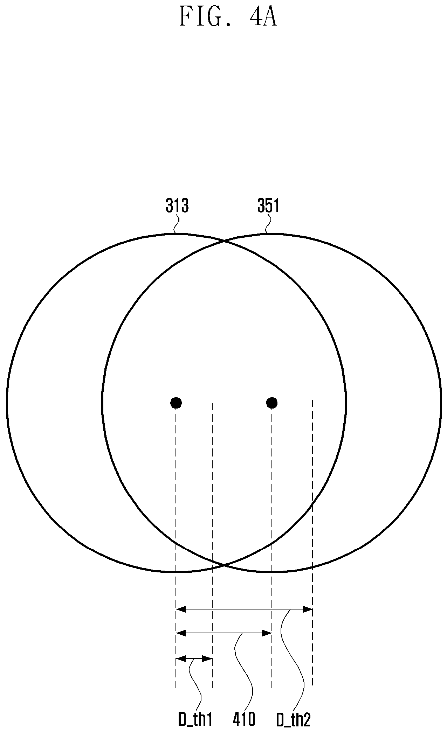

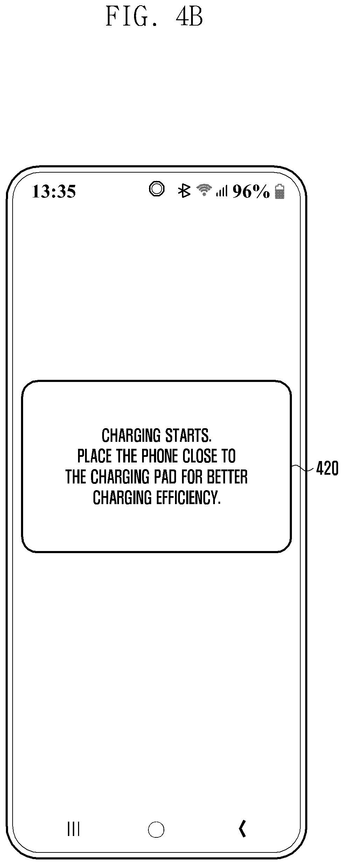

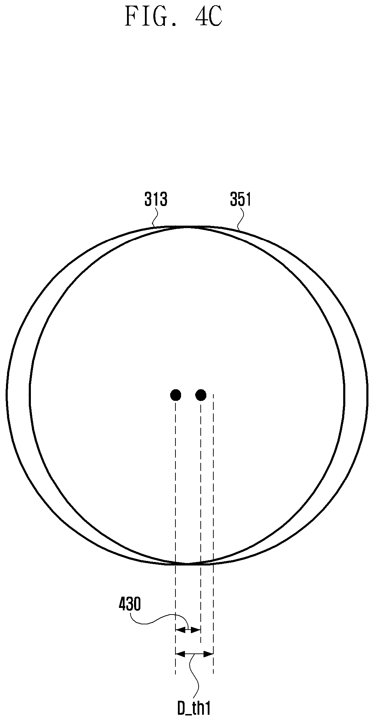

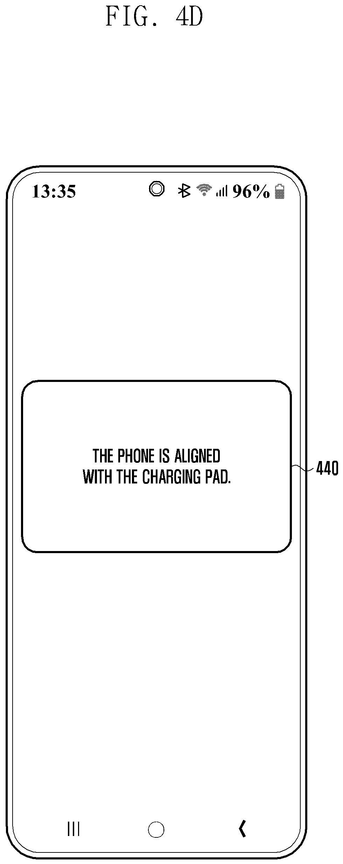

FIGS. 4a, 4b, 4c, and 4d are diagrams to illustrate operations performed by a power receiving device 302 based on charging being initiated by input power according to one embodiment.

According to one embodiment, the drive circuit 356 may output an event to the processor 390 indicating that the second communication circuit 353 and the second control circuit 357 have been awakened by the second wake-up signal. The processor (e.g., an application processor) 390 may display a first information associated with the event on the display 380. For example, a distance 410 (FIG. 4a) between a center of the first coil 313 and a center of the second coil 351 may be greater than a first threshold distance value D_th1 corresponding to a first threshold voltage value V_th1 but less than a second threshold distance value D_th2 corresponding to a second threshold voltage value V_th2, thereby causing a second wake-up signal to be generated in the drive circuit 356 and charging to begin. Based on receiving the event, the processor 390 may display a first request message 420 (FIG. 4b) on the display 480 requesting realignment of the power receiving device 302. Additionally, the processor 390 may drive a vibration motor (e.g., the haptic module 179) to alert the user to the request message 420. The processor 390 may also output an acoustic signal corresponding to the request message 420 to a speaker (e.g., an acoustic output module 155) configured in the power receiving device 302. The processor 390 may also output an acoustic signal corresponding to the request message 420 to an acoustic output device (e.g., a wireless headset) connected to the power receiving device 302 through a wireless communication circuit (e.g., the wireless communication module 192 in FIG. 1) of the third communication circuit 395.

According to one embodiment, after requesting the realignment to the user, the processor 390 may identify the receiving efficiency of the power based on data received from the power receiving circuit 352 and/or the second communication circuit 353 and display the second information on the display 380 based on the identified receiving efficiency being greater than or equal to a specified threshold efficiency value. For example, the distance 430 (FIG. 4c) between the center of the first coil 313 and the center of the second coil 351 may be narrowed or reduced to within the first threshold distance value, thereby increasing the electrical coupling between the two coils 313 and 351 and increasing the receiving efficiency. The processor 390 may transmit a message to the power supply device 301 through the second communication circuit 353 requesting information about a power value (hereinafter, the supply power value) of a power signal that the power supply device 301 transmits to the power receiving device 302 through the first coil 313. In response to the request, the first control circuit 315 in the power supply device 301 may identify the power value (the supply power value) of the power signal output from the power transmission circuit 312 to the first coil 313 and transmit information indicating the identified supply power value to the power receiving device 302 through the first communication circuit 314. The processor 390 may identify from the power receiving circuit 352 a power value (hereinafter, the receiving power value) of the power signal that the power receiving circuit 352 receives from the second coil 351. The processor 390 may identify the receiving efficiency, which represents the ratio of the receiving power value to the supply power value, is greater than or equal to a threshold efficiency value, and may display a guidance message 440 (FIG. 4d) on the display 380 indicating that it is aligned accordingly. Additionally, the processor 390 may drive a vibration motor to alert the user to the guidance message 440. The processor 390 may also output an acoustic signal corresponding to the guidance message 440 to a speaker. The processor 390 may also output an acoustic signal corresponding to the guidance message 440 to an acoustic output device (e.g., a wireless headset) connected to the power receiving device 302 through a wireless communication circuit in the third communication circuit 395.

According to one embodiment, at least one circuit of the second communication circuit 353, the drive circuit 356, and the second control circuit 357 may be a part of the processor 390. For example, at least one of the circuits of the second communication circuit 353, the drive circuit 356, and the second control circuit 357 may be integrated into the processor 390 as a chip (e.g., a system on chip (SOC)) along with a cache memory and one or more cores.

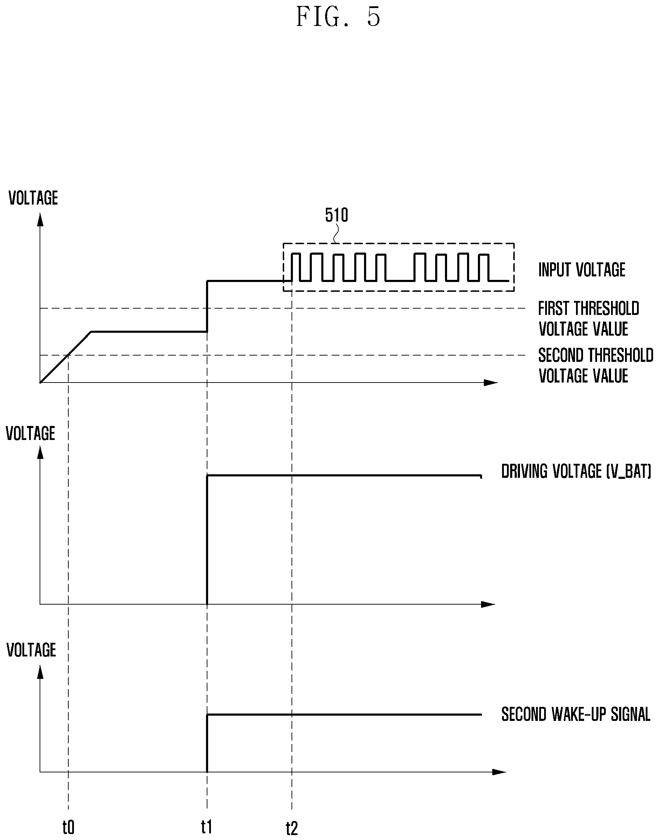

FIG. 5 is a diagram to illustrate the process of the drive circuit waking up the second control circuit so that PD communication can begin according to one embodiment.

The drive circuit 356 may identify from the power signal output from the power receiving circuit 352 that the input voltage is greater than the second threshold voltage value and less than the first threshold voltage value at time t0. The drive circuit 356 may identify from the power signal output from the power receiving circuit 352 that the state in which the input voltage is greater than the second threshold voltage value and less than the first threshold voltage value persists for a specified threshold time (t1- t0). Accordingly, the drive circuit 356 may generate the second wake-up signal at the time t1. Based on the generation of the second wake-up signal, the drive circuit 356 may output the battery power to the second communication circuit 353 and the second control circuit 357. Accordingly, the battery voltage V_BAT may be applied to the second communication circuit 353 and the second control circuit 357 as a driving voltage from time t1 onward. After the driving voltage is applied, the second control circuit 357 may start communicating with the power supply device 301 through the second communication circuit 353 and receive the data 510 at the time t2.

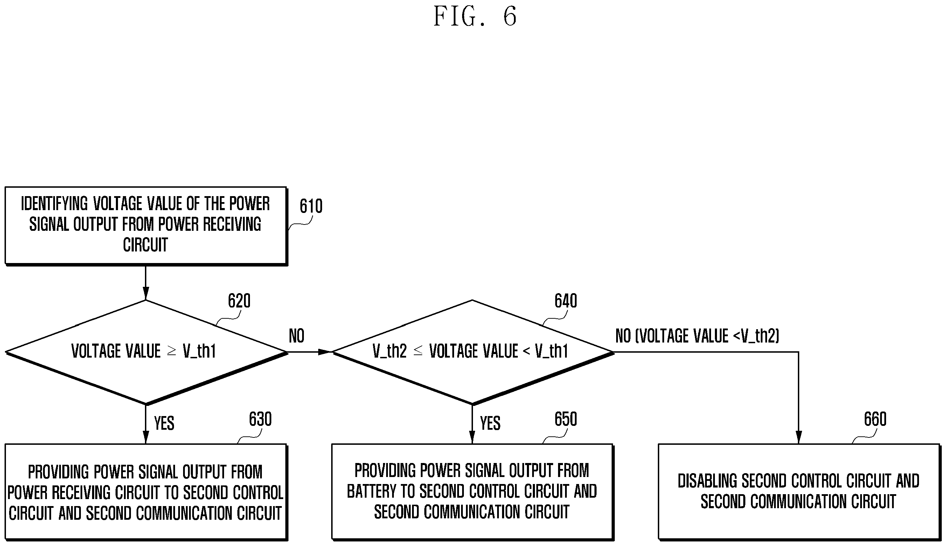

FIG. 6 is a flow chart to illustrate the operations of the drive circuit 356 to initiate the charging of the battery 355 according to one embodiment.

In operation 610, the drive circuit 356 may identify a voltage value of the power signal output from the power receiving circuit 352.

In operation 620, the drive circuit 356 may determine whether the voltage value is greater than or equal to a first threshold voltage value (V_th1).

In operation 630, the drive circuit 356 may provide a power signal output from power receiving circuit 352 to the second control circuit 357 and the second communication circuit 353 based on the voltage value being at least a first threshold voltage value (V_th1).

If the voltage value is less than the first threshold voltage value (V_th1), in operation 640, the drive circuit 356 may determine whether the voltage value is greater than or equal to the second threshold voltage value (V_th2).

In operation 650, the drive circuit 356 may provide a power signal output from the battery 355 to the second control circuit 357 and the second communication circuit 353 based on the voltage value being greater than or equal to the second threshold voltage value (V_th2).

If the voltage value is less than the second threshold voltage value (V_th2), in operation 660, the drive circuit 356 may be disabled by cutting off power to the second control circuit 357 and the second communication circuit 353.

The second control circuit 357, awakened by operation 630 or 650, may transmit a signal (e.g., SSP) to initiate PD communication with the power supply device 301 through the second communication circuit 353 to the power supply device 301. Thereafter, the second control circuit 357 may initiate the charging of the battery 355 by performing the operations (e.g., identification & configuration operations, and power transfer operations) as described above.

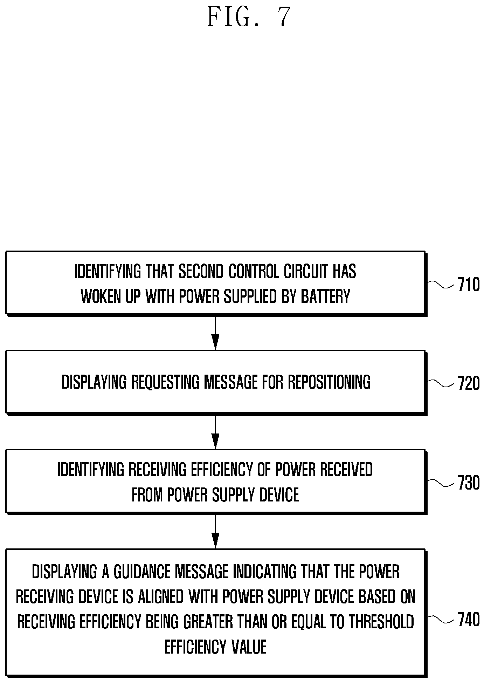

FIG. 7 is a flow chart to illustrate the operations of a processor 390 to increase the charging efficiency according to one embodiment.

In operation 710, the processor 390 may identify from the drive circuit 356 that the second control circuit 357 has woken up with power supplied by the battery 355.

In operation 720, the processor 390 may display a message on the display 380 requesting that the power receiving device 302 be repositioned. Additionally, the processor 390 may drive a vibration motor. The processor 390 may also output an acoustic signal corresponding to the request message to a speaker (or other external acoustic output device).

After the repositioning is requested, in operation 730, the processor 390 may identify the receiving efficiency of the power received from the power supply device 301. For example, the processor 390 may obtain a supply power value from the power supply device 301 through the second communication circuit 353 and a receiving power value from the power receiving circuit 352. Based on the obtained supply power value and receiving power value, the processor 390 may identify a receiving efficiency of the power.

In operation 740, the processor 390 may display a guidance message on the display 380 indicating that the power receiving device 302 is aligned with the power supply device 301 based on the identified receiving efficiency being greater than or equal to a specified threshold efficiency value. Additionally, the processor 390 may drive the vibration motor. The processor 390 may output an acoustic signal corresponding to the guidance message to a speaker (or, alternatively, an external acoustic output device).

In the above description relating to FIGS. 3 through 7, the prefixes "first" and "second" are intended only to distinguish between identical designations and are not themselves assigned any particular meaning, such as importance or order.

According to one embodiment, an electronic device (e.g., a power receiving device 302) may include a coil; a battery; a power receiving circuit configured to receive a power signal from a power supply device through the coil; a power conversion circuit configured to convert a voltage value of the power signal received from the power receiving circuit and output the power signal received from the power receiving circuit to the battery; a communication circuit configured to communicate with the power supply device through the coil; a control circuit configured to control the power receiving circuit, the power conversion circuit, and the communication circuit; and a drive circuit configured to provide a power signal to the control circuit for driving the control circuit. The drive circuit may be configured to identify a voltage value of the power signal output from the power receiving circuit. The drive circuit may be configured to provide a power signal output from the power receiving circuit to the control circuit and the communication circuit based on the identified voltage value being greater than a first threshold voltage value. The drive circuit may be configured to provide a power signal output from the battery to the control circuit and the communication circuit based on the identified voltage value being less than the first threshold voltage value and greater than a second threshold voltage value, wherein the second threshold voltage value is less than the first threshold voltage value.

The drive circuit may be configured to provide a power signal output by the battery to the control circuit and the communication circuit based on the fact that the identified voltage value has been in a state that is greater than the second threshold voltage value and less than the first threshold voltage value for a specified period of time.

The drive circuit may be configured to output an event indicating that the control circuit and the communication circuit have been awakened to a processor of the electronic device by a power signal output by the battery being provided to the control circuit and the communication circuit.

The processor may be configured to display a first information related to the event on a display of the electronic device based on receiving the event from the drive circuit.

The processor may be configured to drive a vibration motor of the electronic device based on receiving the event from the drive circuit.

The processor may be configured to output an acoustic signal based on receiving the event from the drive circuit to a speaker of the electronic device or to an external acoustic device wirelessly connected to the electronic device through other communication circuit of the electronic device.

The processor may be configured to identify, after the first event indication, a supply power value representing the power output by the power supply device, from the power supply device through the communication circuit. The processor may be configured to identify from the power receiving circuit, through the control circuit, a receiving power value of power received through the coil. The processor may be configured to display the second information on a display of the electronic device based on the receiving efficiency representing a ratio of the receiving power value to the supply power value being greater than or equal to a specified threshold efficiency value.

The processor may be configured to drive a vibration motor of the electronic device based on the receiving efficiency being greater than or equal to the threshold efficiency value.

The processor may be configured to output an acoustic signal to a speaker of the electronic device, or to an external acoustic device wirelessly connected to the electronic device through other communication circuit of the electronic device based on the receiving efficiency being greater than or equal to the threshold efficiency value.

The circuit of at least one of the drive circuit and the control circuit may be part of the processor.

The communication circuit and the control circuit may be included on a single chip.

The control circuit may include a microcontroller unit (MCU).

The power receiving circuit may include a rectifier configured to rectify a power signal received from the power supply device through the coil and output to the battery.

According to one embodiment, a method of operating an electronic device (e.g., a power receiving device (302)) is provided. The electronic device may include a coil; a battery; a power receiving circuit configured to receive a power signal from a power supply device through the coil and output to the battery; a power conversion circuit configured to convert a voltage value of the power signal output from the power receiving circuit to the battery; a communication circuit configured to communicate with the power supply device through the coil; and a control circuit configured to control the power receiving circuit, the power conversion circuit, and the communication circuit. The method may include identifying a voltage value of a power signal output from the power receiving circuit. The method may include providing the power signal output from the power receiving circuit to the control circuit and the communication circuit based on the identified voltage value being greater than a first threshold voltage value. The method may include providing a power signal output from the battery to the control circuit and the communication circuit in response to the identified voltage value being less than the first threshold voltage value and greater than a second threshold voltage value.

Providing a power signal output by the battery to the control circuit and the communication circuit may comprise providing a power signal output by the battery to the control circuit and the communication circuit based on the fact that the identified voltage value has been in a state that is greater than the second threshold voltage value and less than the first threshold voltage value for a specified period of time.

The method may further comprise displaying a message on the display requesting that the electronic device be repositioned based on the control circuit and the communication circuit being awakened by a power signal output by the battery being provided to the control circuit and the communication circuit.

The method may further comprise the operation of identifying a receiving efficiency of power received from the power supply device. The method may further comprise the operation of displaying a guidance message indicating that the electronic device is aligned with the power supply device based on the received efficiency being greater than or equal to a specified threshold efficiency value.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as " 1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a coil;
a battery;
a power receiving circuit configured to receive a power signal from a power supply device through the coil;
a power conversion circuit configured to convert a voltage value of the power signal received from the power receiving circuit and to output the power signal received from the power receiving circuit to the battery;
a communication circuit configured to communicate with the power supply device through the coil;
a control circuit configured to control the power receiving circuit, the power conversion circuit, and the communication circuit; and
a drive circuit configured to provide a power signal to the control circuit,
wherein the drive circuit is configured to:
identify a voltage value of the power signal output from the power receiving circuit;
provide a power signal output from the power receiving circuit to the control circuit and the communication circuit based on the identified voltage value being greater than a first threshold voltage value; and
provide a power signal output from the battery to the control circuit and the communication circuit based on the identified voltage value being less than the first threshold voltage value and greater than a second threshold voltage value.

2. The electronic device of claim 1, wherein
the drive circuit is configured to provide a power signal output by the battery to the control circuit and the communication circuit based on the fact that the identified voltage value has been in a state that is greater than the second threshold voltage value and less than the first threshold voltage value for a specified period of time.

3. The electronic device of claims 1 or 2, wherein
the drive circuit is configured to output an event indicating that the control circuit and the communication circuit have been awakened to a processor of the electronic device by a power signal output by the battery being provided to the control circuit and the communication circuit, and
the processor is configured to display a first information associated with the event on a display of the electronic device based on receiving the event from the drive circuit.

4. The electronic vice of claim 3, wherein
the processor is configured to drive a vibration motor of the electronic device based on receiving the event from the drive circuit.

5. The electronic device of claim 3, wherein
the processor is configured to control a speaker of the electronic device or an external acoustic device wirelessly connected to the electronic device through another communication circuit of the electronic device to output an acoustic signal based on receiving the event from the drive circuit.

6. The electronic device of claim 3, wherein
the processor, after the first event indication, is configured to:
identify a supply power value representing the power output by the power supply device, from the power supply device through the communication circuit;
identify a receiving power value of power received through the coil from the power receiving circuit through the control circuit; and
display a second information on a display of the electronic device based on a receiving efficiency representing a ratio of the receiving power value to the supply power value being greater than or equal to a specified threshold efficiency value.

7. The electronic device of claim 6, wherein
the processor is configured to drive a vibration motor of the electronic device based on the receiving efficiency being greater than or equal to the threshold efficiency value.

8. The electronic device of claim 7, wherein
the processor is configured to control the speaker of the electronic device or the external acoustic device wirelessly connected to the electronic device through another communication circuit of the electronic device to output an acoustic signal based on the receiving efficiency being greater than or equal to the threshold efficiency value.

9. The electronic device of claim 3, wherein
at least one of the drive circuit and the control circuit is an electronic device that is part of the processor.

10. The electronic device of claim 1, wherein
the communication circuit and the control circuit are electronic devices contained on a single chip.

11. The electronic device of claim 1, wherein
the control circuit comprises a microcontroller unit (MCU).

12. The electronic device of claim 1, wherein
the power receiving circuit comprises a rectifier configured to rectify a power signal received from the power supply device through the coil and output to the battery.

13. A method of operating an electronic device, the method comprising:
wherein the electronic device comprises a coil; a battery; a power receiving circuit configured to receive a power signal from a power supply device through the coil and output to the battery; a power conversion circuit configured to convert a voltage value of the power signal output from the power receiving circuit to the battery; a communication circuit configured to communicate with the power supply device through the coil; and a control circuit configured to control the power receiving circuit, the power conversion circuit, and the communication circuit,
identifying a voltage value of a power signal output from the power receiving circuit;
providing a power signal output from the power receiving circuit to the control circuit and the communication circuit based on the identified voltage value being greater than a first threshold voltage value; and
providing a power signal output from the battery to the control circuit and the communication circuit based on the identified voltage value being less than the first threshold voltage value and greater than a second threshold voltage value.

14. The method of claim 13, wherein
providing a power signal output by the battery to the control circuit and the communication circuit further comprises providing a power signal output by the battery to the control circuit and the communication circuit based on the fact that the identified voltage value has been in a state that is greater than the second threshold voltage value and less than the first threshold voltage value for a specified period of time.

15. The method of claim 13, further comprising displaying a message on the display requesting that the electronic device be repositioned based on the control circuit and the communication circuit being awakened by a power signal output by the battery being provided to the control circuit and the communication circuit.

16. The method of claim 15, further comprising:
identifying a receiving efficiency of power received from the power supply device; and
displaying a guidance message indicating that the electronic device is aligned with the power supply device based on the receiving efficiency being greater than or equal to a specified threshold efficiency value.
